# EUROPEAN PATENT SPECIFICATION

(11) **EP 3 007 296 B1**
(45) Date of publication and mention of the grant of the patent: **13.11.2019**
(21) Application number: 14807383.6
(22) Date of filing: 04.06.2014
(51) Int. Cl.: H02J 3/00, G05F 1/66, G05B 13/02, H02J 13/00

(54) **POWER MANAGEMENT METHOD AND POWER MANAGEMENT DEVICE**
LEISTUNGSVERWALTUNGSVERFAHREN UND LEISTUNGSVERWALTUNGSVORRICHTUNG
PROCÉDÉ DE GESTION D'ÉNERGIE ET DISPOSITIF DE GESTION D'ÉNERGIE

(30) Priority: 04.06.2013 JP 2013118113
(43) Date of publication of application: 13.04.2016
(73) Proprietor: Kyocera Corporation, Kyoto-shi Kyoto 612-8501 (JP)
(72) Inventor: YOSHITANI, Naohisa, Kyoto-shi Kyoto 612-8501 (JP)
(74) Representative: SSM Sandmair
(86) International application number: PCT/JP2014/002977
(87) International publication number: WO 2014/196199

(56) References cited:
- EP-A1- 2 579 203
- WO-A1-2013/021502
- WO-A1-2013/069619
- JP-A- H11 313 441
- JP-A- 2004 032 983
- JP-A- 2010 088 279
- JP-A- 2011 234 570
- JP-A- 2013 031 355

## Description

### TECHNICAL FIELD

This disclosure relates to a power management method and a power management device that provides information relating to power consumption of load devices of a consumer's facility.

### BACKGROUND

EP 2 579 203 A1 and WO 2013/021502 A1 relate to a power management method and a power management device according to the preamble of the independent claims.

In Japan, power is provided by power distributors to high-voltage consumers such as commercial facilities, and the sale of power is based on contract demand. Contract demand refers to the amount of power permitted to be consumed on average per demand time period, which for example is in units of 30 minutes. Therefore, business operators that receive power supply based on such a power sales contract want the average of integral power consumption, which is the integrated value of power consumption per demand time period ("demand power"), to be kept under a target power, such as the contract demand.

To address this issue, one proposed control device keeps power consumption down by suspending a portion of operating load devices when the demand power during the current demand time period of a business operator is likely to exceed the contract demand (see JP 2007-129837 A (PTL 1)).

### CITATION LIST

### Patent Literature

PTL 1: JP 2007-129837 A

### SUMMARY

### (Technical Problem)

Even when suspending a portion of the load devices, however, inconveniences are ideally kept to a minimum.

It would therefore be helpful to provide a power management method and a power management device that indicate the load device that would contribute optimally to reducing power consumption.

### (Solution to Problem)

To solve the above-described problem, a power management method according to one aspect is a power management method for managing power for a consumer's facility using a power management device, the method including:
predicting, by the power management device, whether an integral power consumption of load devices of the consumer's facility will exceed a predetermined value during a reference time used for electric power charge calculation between a consumer and a power company;
extracting, by the power management device, when predicting that the integral power consumption will exceed the predetermined value, each load device, from among the load devices currently in use, that has a response time, from execution of an operation to reduce power consumption until the power consumption is reduced, that is less than a remaining time of the reference time; and
presenting, by the power management device, each extracted load device.

In a power management method according to a second aspect, the response time of each extracted load device may be shorter than a time required for the predicted integral power consumption to reach the predetermined value.

A power management method according to a third aspect may further include:
selecting at least one of the load devices that are presented; and
determining, by the power management device, whether the integral power consumption can be kept under the predetermined value by an end of the reference time via execution of an operation to reduce power consumption of the selected load device.

A power management method according to a fourth aspect may further include issuing, by the power management device, a warning until determining that the integral power consumption can be kept under the predetermined value by the end of the reference time.

A power management method according to a fifth aspect may further include:
recognizing, by the power management device, execution of an operation to reduce power consumption of the selected load device; and
suspending issuance of a warning by the power management device until reduction of the power consumption of the load device for which the execution of an operation to reduce power consumption was recognized.

In a power management method according to a sixth aspect,
the response time of each extracted load device may be less than an execution arrival time, and
the execution arrival time may be a time required for the predicted integral power consumption to reach the predetermined value, minus an allowance time from measurement of the integral power consumption until presentation of the choices.

In a power management method according to a seventh aspect,
during the extracting, each power generation device having a startup time, from execution of a startup operation until power generation begins, that is less than the remaining time of the reference time may be extracted from among power generation devices of the consumer's facility that are currently suspended, and
during the presenting, each extracted power generation device may also be presented.

In a power management method according to an eighth aspect, the predetermined value may be a target value set in advance to be equal to or less than a threshold in a case that an electric rate for the electric power charge differs depending on whether the integral power consumption exceeds the threshold at an end of the reference time.

While a solution to the problem has been described above in terms of methods, this disclosure may also be implemented as a device, program, or recording medium storing a program that substantially correspond to these methods, and these implementations are to be understood as included in the scope of this disclosure.

For example, a power management device according to a ninth aspect that implements this disclosure as a device is a power management device for managing power for a consumer's facility, the power management device including:
a controller configured to acquire an integral power consumption of load devices of the consumer's facility, such that
when predicting that the integral power consumption of the load devices of the consumer's facility will exceed a predetermined value during a reference time used for electric power charge calculation between a consumer and a power company, the controller presents each load device, from among the load devices currently in use, for which a response time, from execution of an operation to reduce power consumption until the power consumption is reduced, is less than a remaining time of the reference time.

A power management method according to a tenth aspect is a power management method for managing power for a consumer's facility using a power management device, the method including:
acquiring, by the power management device, an integral power consumption of load devices of the consumer's facility;
predicting, by the power management device, whether the integral power consumption of the load devices of the consumer's facility will exceed a predetermined value during a reference time used for electric power charge calculation between a consumer and a power company;
extracting, by the power management device, each load device, from among the load devices currently in use, for which a time, from execution of an operation to reduce power consumption until the power consumption is reduced, is less than a remaining time of the reference time; and
presenting, by the power management device, when predicting that the integral power consumption will exceed the predetermined value, a choice for each extracted load device.

### (Advantageous Effect)

The disclosed power management method and power management device as described above can indicate the load device that would contribute optimally to reducing power consumption.

### BRIEF DESCRIPTION OF THE DRAWINGS

In the accompanying drawings:
FIG. 1 is a communication system diagram schematically illustrating the structure of a power control system that executes a choice presentation method within a power management method according to one of the disclosed embodiments;
FIG. 2 is a functional block diagram of devices located within the LAN in FIG. 1;
FIG. 3 illustrates an example of a warning screen presented to a user by a user terminal;
FIG. 4 illustrates an example of a warning screen when it is determined, based on selection of load devices, that the demand power can be kept under a target value;
FIG. 5 is a flowchart illustrating a choice creation process executed by the controller;
FIG. 6 is a first flowchart illustrating a warning screen control process executed by the power management device; and
FIG. 7 is a second flowchart illustrating a warning screen control process executed by the power management device.

### DETAILED DESCRIPTION

The following describes embodiments with reference to the drawings.

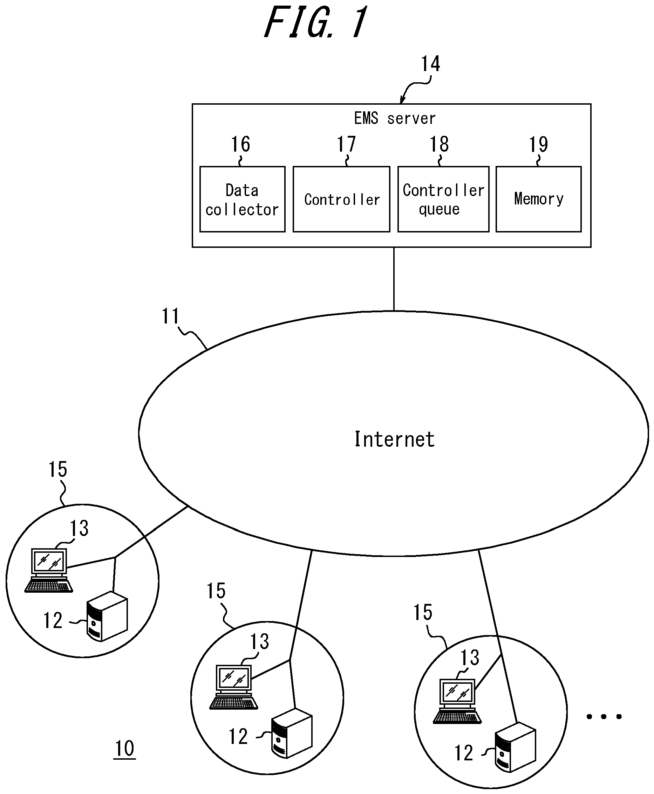

First, a power control system that executes a choice presentation method according to one of the disclosed embodiments is described. FIG. 1 is a communication system diagram schematically illustrating the structure of a power control system according to this embodiment.

As illustrated in FIG. 1, a power control system 10 includes the Internet 11, a plurality of power management devices 12, a plurality of user terminals 13, and an Energy Management System (EMS) server 14.

The power management devices 12, the user terminals 13, and the EMS server 14 are connected over the Internet 11 and transmit signals for information, control instructions, and the like. A Local Area Network (LAN) 15 is, for example, established for each of a plurality of stores, and at least one power management device 12 and at least one user terminal 13 is located in each LAN 15. The power management device 12 and the user terminal 13 located within the same LAN 15 can also communicate directly.

The power management device 12 is, for example, an EMS Gateway. The power management device 12 periodically transmits a measured value, such as the power consumption detected by the below-described sensor, to the EMS server 14. By polling, the power management device 12 acquires, from the EMS server 14, analysis information on the power management status and control instructions for the load devices located within the same LAN 15. The power management device 12 transmits the analysis information received from the EMS server 14 to the user terminal 13. Based on the received control instructions, the power management device 12 controls the load devices located within the same LAN 15.

The user terminal 13 is for example a PC, tablet device, smart phone, or the like that has a display and can display the analysis information received from the power management device 12. The user terminal 13 can also display the measured value measured by the sensors located in the same LAN 15 and the operation status of the load devices located in the same LAN 15. When displaying such information, the user terminal 13 acquires data from the EMS server 14 by HTTP, and a web browser on the user terminal 13 creates a measured value display page. The user terminal 13 also issues control instructions to the load devices in the same LAN 15. The issuing of control instructions is based on detection of user operation on a device control page configured by the web browser. The user terminal 13 transmits the issued control instructions to the EMS server 14.

The EMS server 14 receives and stores the measured values transmitted from the power management device 12. Based on the measured values transmitted from the power management device 12, the EMS server 14 also performs analysis related to the power management status and creates the analysis information. The EMS server 14 also receives the control instructions issued by the user terminal 13. Additionally, the EMS server 14 creates a control instruction for each load device. The created analysis information, the received control instruction, and the created control instruction are acquired by each power management device 12 by polling. The EMS server 14 can also receive and update registration of sensor information and response time information for the load devices located in each LAN 15.

The EMS server 14 includes a data collector 16, a controller 17, a controller queue 18, and a memory 19. The data collector 16 collects and stores measured values and sensor registration information. Collection of these data by the data collector 16 is periodic, and the stored data are periodically updated. In order to achieve a variety of purposes, the controller 17 analyzes the power management status of each power management device 12 with a variety of algorithms and creates the analysis information. The controller 17 also creates the control instruction for each load device with a variety of algorithms in order to achieve a variety of purposes. The controller queue 18 stores the control instructions received from the user terminal 13 and the analysis information and the control instructions created by the controller 17. The memory 19 stores a variety of data used by the controller 17 to analyze the power management status and to create the control instructions.

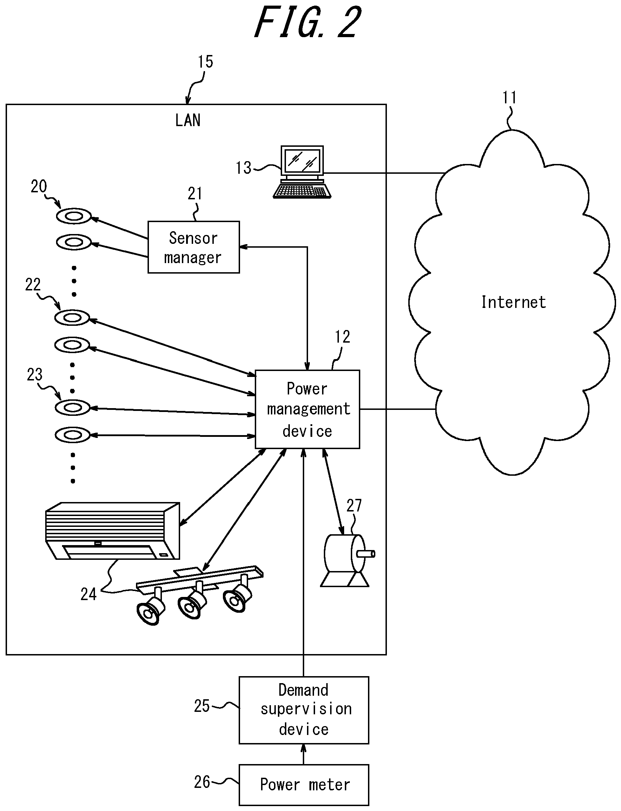

Next, the transmission of measured values and the control of load devices by the power management device 12 are described. FIG. 2 is a functional block diagram of devices located within any given LAN 15.

A first sensor 20, sensor manager 21, second sensor 22, third sensor 23, load device 24, power generation device 27, power management device 12, and user terminal 13 are located within this LAN 15. The power management device 12 is connected to a power meter 26 via a demand supervision device 25.

The first sensor 20 is any sensor such as a current sensor, power sensor, temperature sensor, or illumination sensor and detects a measured value related to the drive status of the load devices 24 located in the LAN 15.

The sensor manager 21 detects the measured value from the first sensor 20. The sensor manager 21 for example communicates with the power management device 12 by a standard protocol such as Smart Energy Profile 2.0 (SEP 2.0) of ZigBee®, or Echonet®.

The second sensor 22 is any sensor such as a current sensor, power sensor, temperature sensor, or illumination sensor and detects a measured value related to the drive status of the load devices 24 located in the LAN 15. Unlike the first sensor 20, the second sensor 22 communicates with the power management device 12 by a unique protocol.

The third sensor 23 is any sensor such as a current sensor, power sensor, temperature sensor, or illumination sensor and detects a measured value related to the drive status of the load devices 24 located in the LAN 15. Unlike the first sensor 20 and the second sensor 22, the third sensor 23 communicates directly with the power management device 12 by a standard protocol such as SEP 2.0, Echonet®, or ECHONET Lite.

The load devices 24 are devices driven by electrical power, such as a PC, air conditioner, lighting appliance, or refrigerator. The operation status of the load devices 24 is adjustable, for example by temperature adjustment, illumination intensity adjustment, or turning the power ON/OFF, and the power consumption of the load devices 24 varies in accordance with such adjustments. The load devices 24 communicate with the power management device 12 by a standard protocol such as Echonet.

The power generation device 27 is for example a power generator that uses gas, gasoline, light oil, or the like as fuel; a fuel cell; or other such device and provides power to the load devices 24 in the LAN 15. While the power generation device 26 is producing power, the power received by supply from the commercial power grid, i.e. the demand power, can be reduced. The power generation device 27 communicates with the power management device 12 by a standard protocol such as Echonet.

As described above, the power management device 12 can communicate with the sensor manager 21, the second sensor 22, and the third sensor 23 and periodically transmits the measured values from the first sensor 20, the second sensor 22, and the third sensor 23 to the EMS server 14 over the Internet 11. As also described above, by polling, the power management device 12 acquires, from the EMS server 14, analysis information on the power management status of the load devices 24 located within the same LAN 15 and control instructions for the load devices 24. The power management device 12 causes the user terminal 13 to display the analysis information and controls the operation status of the load devices 24 based on the control instructions.

Furthermore, the power management device 12 recognizes the start of a demand time period (reference time) from the output of the demand supervision device 25. The demand time period is a reference time period used to determine the contract demand between the business operator (consumer) that runs a store or the like and the power company. For example, when the demand time period is 30 minutes and the contract demand is 300 kW, the business operator is allowed to consume an average of 300 kW of power in each demand time period. In other words, the integral power consumption at the end of the demand time period is allowed to be up to 150 kWh. If the integral power consumption exceeds 150 kWh even once during a demand time period, the next higher electric rate is applied. The power management device 12 also acquires, from the output of the demand supervision device 25, the current value of the demand power by all of the load devices 24 in the store during the current demand time period.

As described above, the user terminal 13 displays analysis information related to the power management status of the load devices 24 located within the same LAN 15. As also described above, the user terminal 13 displays the measured values from the first sensor 20, the second sensor 22, and the third sensor 23 that are located in the same LAN 15 and displays the operation status of each load device 24. Furthermore, as described above, the user terminal 13 allows for a direct control instruction for each load device 24, such as an instruction for directly setting the temperature or the illumination intensity.

The demand supervision device 25 reads a pulse output by the power meter 26 and outputs the read pulse to the power management device 12.

The power meter 26 measures the integral power consumption, which is the integrated value of power consumption for each store during the demand time period. The power meter 26 resets the integral power consumption at the start of a demand time period and measures the integral power consumption from the start of the demand time period to the present.

In the above-described configuration, as the analysis information related to the power management status, the EMS server 14 creates choices of load device(s) 24 that should be operated manually to reduce power consumption and/or power generation device(s) 27 that should be started up, and the power management device 12 presents choices based on the received choices, as described below.

Based on the amount of time elapsed from the start of the demand time period and on the current value of the integral power consumption of the load devices 24 controlled by any power management device 12, the controller 17 calculates a predicted value of the integral power consumption at the end of the demand time period.

A variety of algorithms may be applied to calculate the predicted value. The predicted value may simply be calculated as a linear increase over the current value of the integral power consumption during the remaining time, based on the rate of increase in the integral power consumption from the start of the demand time period to the present. The predicted value may also be calculated statistically from past history or the like.

When the predicted value exceeds a target value, the controller 17 creates choices of load device(s) 24 for which power consumption should be reduced and power generation device(s) 26 that should be started up. The target value is set by the user for each store, i.e. for each power management device 12. For example, an amount of power corresponding to the product of the contract demand and the demand time period may be set as the target value. In other words, when the demand time period is 30 min and the contract demand is 300 kW, as in the above example, the integral power consumption that is allowed by the end of the demand time period (i.e. the threshold) is 150 kWh, and an amount of power lower than 150 kWh is set as the target value.

The calculation of the predicted value and the comparison with the target value are made at specific times during the demand time period, such as in five-minute cycles from the start of the demand time period. The calculation of the predicted value and the comparison with the target value are not limited to these times during the demand time period, nor is the number of calculations and comparisons limited. Furthermore, the time for making the calculation and comparison may be input by operating the user terminal 13.

When creating the choices, the controller 17 uses the response time of the load device 24 and the startup time of the power generation device 26. The response time refers to the length of time it takes from operation of the load device 24 until the power consumption reduces. The response time differs depending on the type of load device 24 and the operation that is performed. For example, if the load device 24 is a lighting appliance, power consumption reduces immediately upon an operation to turn the power off or to change the setting of the illumination intensity. Therefore, the response time is relatively short for a lighting appliance. By contrast, when turning off power to an air conditioner that is the load device 24, the compressor stops immediately after the power is turned off, yet the indoor fan continues to revolve for a short while, so as to increase efficiency of heating and cooling operations. Accordingly, when changing a setting so as to turn off power to an air conditioner, the response time is relatively long. The time for the operation itself is also included in the response time and differs depending on factors such as the installation location of the load device 24. For example, as the location of operation (the installation location of the load device 24 or the operating switch) is farther from the user terminal 13, the time that is required for the operation itself becomes longer, and so does the response time. The startup time refers to the length of time it takes from operation of the power generation device 26 until power generation reaches rated power. The startup time differs depending on the type of power generation device 26. For example, when the power generation device 26 is a power generator that uses fuel, the startup time may be a relatively short time of approximately one minute. By contrast, when the power generation device 26 is a fuel cell, the startup time is a relatively long time of several hours. Like the response time, the startup time also includes the time for the operation itself.

In order to create the choices, the controller 17 calculates the remaining time from the present until the end of the demand time period. Next, the controller 17 calculates the effective remaining time, which is the result of subtracting an allowance time from the remaining time. The allowance time refers to the time that it takes for the first sensor 20, the second sensor 22, the third sensor 23, and the power meter to output measured values, for the power management device 12 to transmit the measured values to the EMS server 14, and for the EMS server 14 to create the choices and present the choices to the power management device 12 that reads the choices. The allowance time is, for example, three minutes. Next, from among the load devices 24 currently in use, the controller 17 extracts each load device 24 for which the response time is shorter than the effective remaining time. Similarly, from among the power generation devices 27 that are currently stopped, the controller 17 extracts each power generation device 27 for which the startup time is shorter than the effective remaining time.

The controller 17 also calculates the arrival time, which is the amount of time it takes for the integral power consumption in the current demand time period to reach the target value. Next, the controller 17 calculates the effective arrival time, which is the result of subtracting the allowance time from the arrival time. Next, from among the load devices 24 currently in use, the controller 17 extracts each load device 24 for which the response time is shorter than the effective arrival time. Similarly, from among the power generation devices 27 that are currently stopped, the controller 17 extracts each power generation device 27 for which the startup time is shorter than the effective arrival time.

The controller 17 creates choices for the extracted load device(s) 24 and the extracted power generation device(s) 27. The created choices are, for example, shown as in Table 1 and include information on load device(s) 24 for which power consumption can be reduced and power generation device(s) 27 that can generate power within the effective remaining time, information on whether power consumption can also be reduced within the effective arrival time for each load device 24, and information on power consumption and power generation. The power consumption in Table 1 is the standard power consumption of the load device 24 and indicates the standard attainable reduction in power consumption by turning the power of the load device 24 off. The power generation in Table 1 is the standard power generation for the power generation device 27 and indicates the standard power generation that can be provided by starting up the power generation device 26. In other words, Table 1 shows the potential power reduction by turning the power off and the potential power supply by startup. Table 1 may also include information such as the power consumption per unit time corresponding to a setting change, for example to adjust the temperature of an air conditioner. The choices may also include a priority ranking of load devices 24 set for each LAN 15. The controller 17 stores the created choices as analysis information in the controller queue 18.

**[Table 1]**

| | Reduction within remaining time | Reduction within arrival time | Power consumption (generation) |
|---|---|---|---|
| Air conditioner 1 | YES | YES | a1 |
| Air conditioner 2 | YES | NO | a2 |
| Air conditioner 3 | YES | NO | a3 |
| Refrigerator 1 | YES | YES | b1 |
| Refrigerator 2 | YES | NO | b2 |
| Heater 1 | YES | YES | c1 |
| Heater 2 | YES | YES | c2 |
| Fryer 1 | YES | YES | d1 |
| Fryer 2 | YES | YES | d2 |
| Lighting appliance 1 | YES | YES | e1 |
| Lighting appliance 2 | YES | YES | e2 |
| Lighting appliance 3 | YES | YES | e3 |
| Diesel power generator | YES | YES | f |

For each load device 24 and for each type of setting change, the memory 19 of the EMS server 14 stores the response time for each type of setting change to the load device 24, the startup time of the power generation device 27, and the power consumption or power generation for the setting change. In order to create the above-described choices, the controller 17 reads information such as the response time, the power consumption or power generation, and for example the priority ranking from the memory 19.

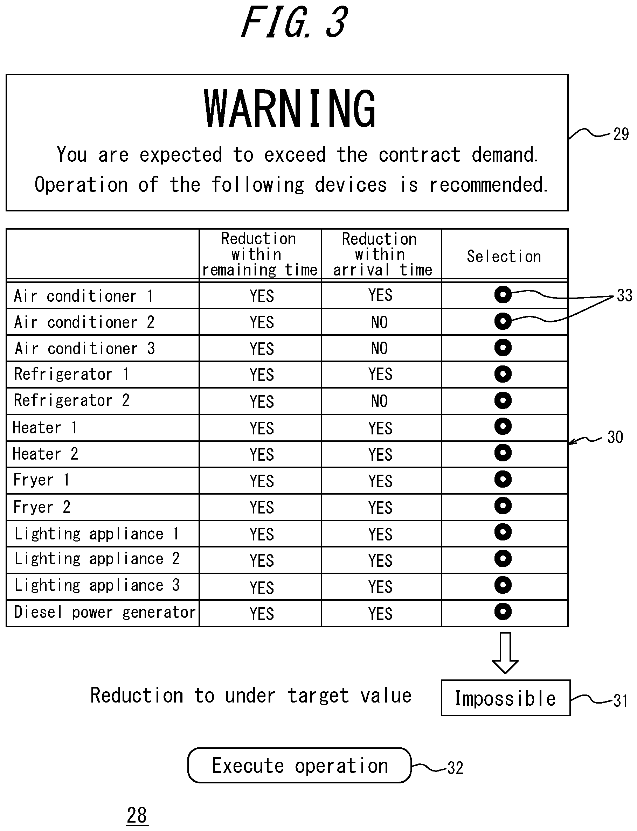

Upon acquiring the choices as the analysis information from the EMS server 14, the user terminal 13 for example creates a warning screen 28 to present to the user, such as the one in FIG. 3. The warning screen 28 includes a warning section 29, a table of choices 30, a determination section 31 indicating whether reduction to the target value is possible, and an execute operation button 32.

The warning section 29 issues a warning that the target value is expected to be exceeded during the current demand time period.

In order to prevent the target value from being exceeded, the table of choices 30 indicates load device(s) 24 for which an operation to reduce power consumption is recommended or power generation device(s) 27 for which startup is recommended (see the "reduction within remaining time" column). The table of choices 30 also indicates whether the load device(s) 24 or power generation device(s) 27 listed as choices can reduce the power consumption to the target value within the effective arrival time of the target value (see the "reduction within arrival time" column). The priority ranking determined for each load device 24 may be displayed in the table of choices 30. The priority ranking may be displayed by a number indicating the priority ranking or by listing the load devices 24 according to the priority ranking.

The table of choices 30 includes a selection checkbox 33 for selecting whether to perform an operation to reduce power consumption for each load device 24 listed as a choice and whether to start up each power generation device 27 listed as a choice. When the power manager of a store or the like checks the selection checkbox 33 for any load device 24 or power generation device 27, the power management device 12 determines whether the integral power consumption can be kept under the target value during the current demand time period via operation of the selected device. To determine whether the integral power consumption can be kept under the target value, the power management device 12 uses the response time of the load device 24 or the startup time of the power generation device 27 that was selected, and the power consumption of the load device 24 or the power generation of the power generation device 27.

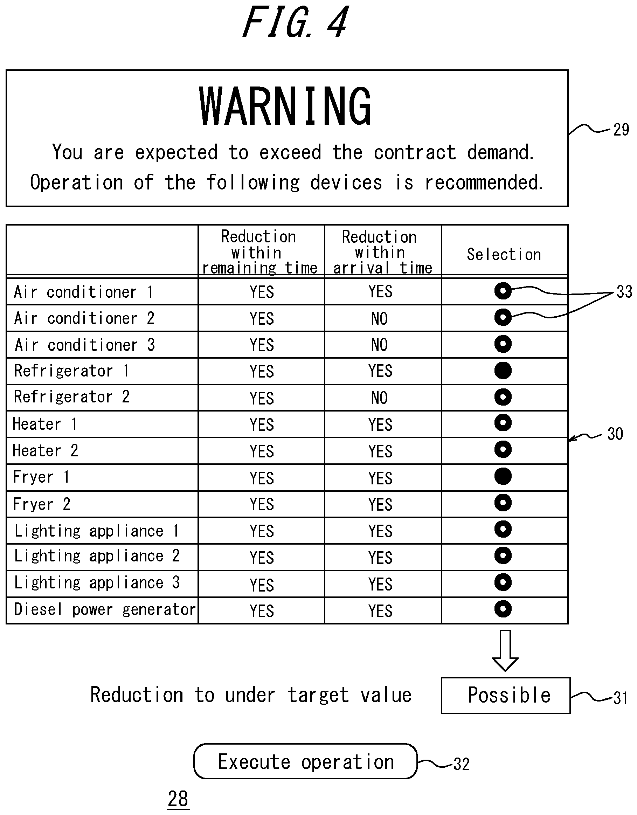

The determination section 31 indicating whether reduction to the target value is possible displays whether the integral power consumption can be kept under the target value by the end of the current demand time period via operation of the load device(s) 24 or the power generation device(s) 27 checked in the selection checkbox 33. When no load device 24 or power generation device 27 has been selected, or when the integral power consumption cannot be kept under the target value with only the selected load device(s) 24 and power generation device(s) 27, then the message "impossible" is displayed in the determination section 31. Conversely, when the integral power consumption can be kept under the target value with the selected load device(s) 24 and power generation device(s) 27, then the message "possible" is displayed in the determination section 31 (see FIG. 4). The power management device 12 issues the warning by displaying the warning section 29 at least until it is determined that the integral power consumption can be kept under the target value.

Input can be provided to the execute operation button 32 by pressing with a pointing device, such as a mouse, on the user terminal 13. Upon the execute operation button 32 detecting input, the power management device 12 confirms the execution of an operation to reduce power consumption by the load device(s) 24, or an operation to start up the power generation device(s) 27, that were selected in the selection checkbox 33.

Upon detecting input to the execute operation button 32, the power management device 12 suspends issuing of the warning. Upon suspending issuing of the warning, the power management device 12 hides the display of the warning section 29 until the suspension is lifted, even when acquiring analysis information from the EMS server 14. The power management device 12 lifts the suspension after the response time of all of the selected load devices 24 has elapsed or after the startup time of all of the selected power generation devices 27 has elapsed after detection of input.

The power management device 12 also acquires the measured value from the first sensor 20, the second sensor 22, and the third sensor 23. Based on the measured values, the power management device 12 calculates the length of time from the detection of input on the execute operation button 32 until the power consumption of the selected load device(s) 24 actually reduces. Based on the measured values, the power management device 12 also calculates the length of time from the detection of input on the execute operation button 32 until power generation by the selected power generation device(s) 27 begins.

The power management device 12 transmits the calculated length of time periodically to the EMS server 14 over the Internet 11. Using the acquired length of time, the EMS server 14 updates the response time or the startup time stored in the memory 19. Accordingly, by the power manager pressing the execute operation button 32 upon deciding on the load device(s) 24 and power generation device(s) 27 to operate, the actual response time or startup time that includes the time taken by the operation itself can be updated.

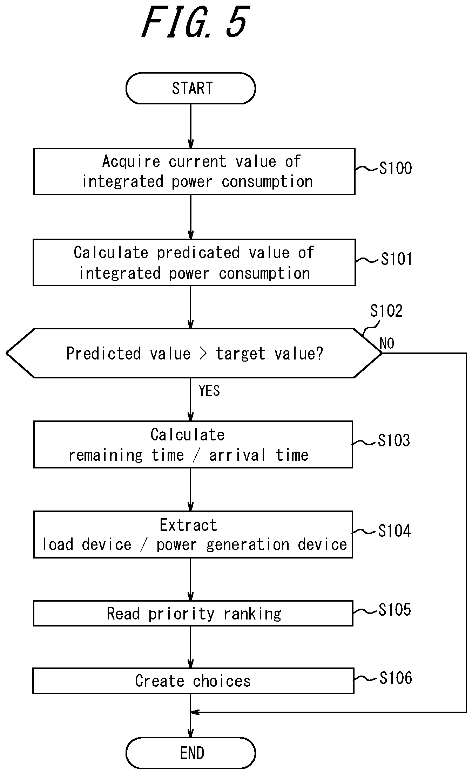

Next, the choice creation process executed by the controller 17 in this embodiment is described with reference to the flowchart in FIG. 5. The controller 17 begins the choice creation process periodically or, for example, each time the EMS server 14 acquires the current value of the integral power consumption from the power management device 12.

In step S100, the controller 17 acquires the current value of the integral power consumption from the data collector 16, i.e. the integral power consumption acquired most recently from the power management device 12. Upon acquiring the current value, the process proceeds to step S101.

In step S101, the controller 17 calculates the predicted value of the integral power consumption at the end of the demand time period based on the current value of the integral power consumption acquired in step S100 (prediction step). Upon calculating the predicted value, the process proceeds to step S102.

In step S102, the controller 17 determines whether the predicted value calculated in step S101 exceeds the target value. When the predicted value exceeds the target value, the process proceeds to step S103. When the predicted value is equal to or less than the target value, the process to reduce the demand power terminates.

In step S103, the controller 17 calculates the remaining time from the present until the end of the demand time period and then calculates the effective remaining time by subtracting the allowance time. The controller 17 also calculates the arrival time, which is the time required for the integral power consumption in the current demand time period to reach the target value, and then calculates the effective arrival time by subtracting the allowance time. Once the effective remaining time and the effective arrival time are read, the process proceeds to step S104.

In step S104, the controller 17 reads the response time of the load device(s) 24 that are currently in use and the startup time of the power generation device(s) 26 from the memory 19. Furthermore, the controller 17 extracts each load device 24 for which the response time is shorter and each power generation device 26 for which the startup time is shorter than the effective remaining time calculated in step S103 (extraction step). The controller 17 also extracts each load device 24 for which the response time is shorter and each power generation device 26 for which the startup time is shorter than the effective arrival time calculated in step S103. Once the load device(s) 24 and power generation device(s) 26 are extracted, the process proceeds to step S105.

In step S105, the controller 17 reads, from the memory 19, the priority ranking of the load device(s) 24 for which the response time was shorter and power generation device(s) 26 for which the startup time was shorter than the effective remaining time in step S105. Once the priority ranking is read, the process proceeds to step S106.

In step S106, the controller 17 creates choices using the load device(s) 24 and power generation device(s) 26 extracted in step S104 and the priority ranking read in step S105. The controller 17 stores the created choices as analysis information in the controller queue 18. Once the analysis information is stored, the choice creation process terminates.

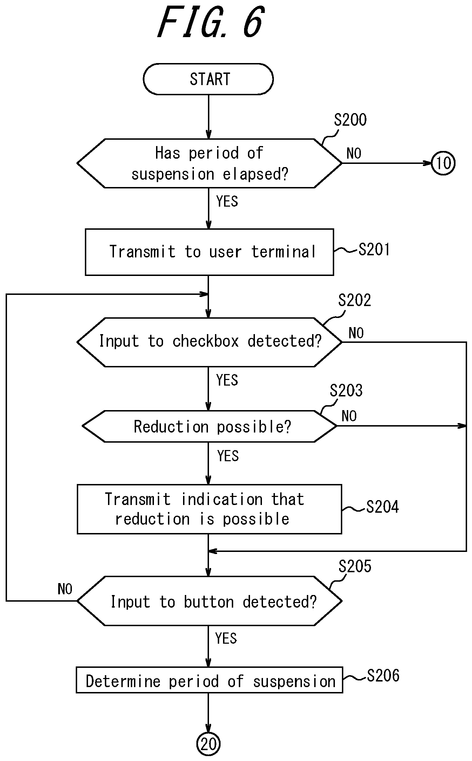

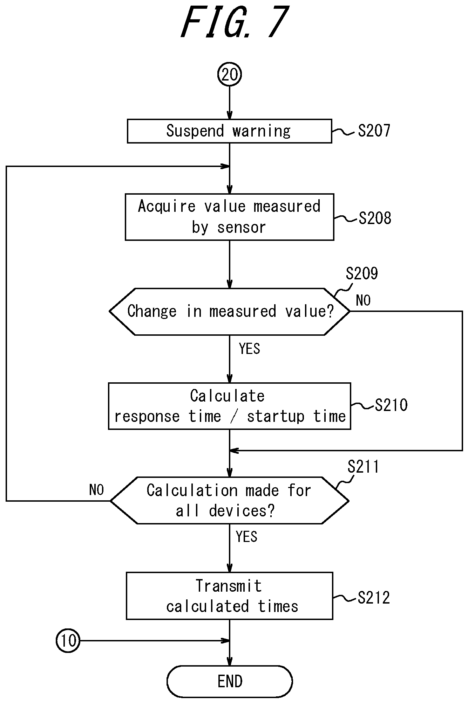

Next, the warning screen control process executed by the power management device 12 in this embodiment is described with reference to the flowcharts in FIGS. 6 and 7. The power management device 12 starts the warning screen control process upon acquiring the analysis information from the EMS server 14 by polling.

In step S200, the power management device 12 determines whether issuance of the warning is currently suspended. When issuance of the warning is currently suspended, the warning screen control process terminates (see FIG. 7). When the period of suspension has elapsed, the process proceeds to step S201.

The power management device 12 transmits the acquired analysis information to the user terminal 13 and causes the user terminal 13 to display the warning screen 28 (see FIGS. 3, 4) in step S201 (presentation step, issuing step). Once the analysis information is transmitted to the user terminal 13, the process proceeds to step S202.

In step S202, the power management device 12 determines whether input has been detected to the selection checkbox 33 on the user terminal 13 (selection step). When input has not been detected, the process skips steps S203 and S204 and proceeds to step S205. When input has been detected, the process proceeds to step S203.

In step S203, the power management device 12 determines whether the predicted value of the integral power consumption can be kept under the target value before the arrival time via operation of the load device(s) 24 and power generation device(s) 27 selected using the selection checkbox 33 (determination step). When it is determined that the integral power consumption cannot be kept under the target value, the process skips step S204 and proceeds to step S205.

When it is determined that the integral power consumption can be kept under the target value, the process proceeds to step S204.

In step S204, the power management device 12 transmits to the user terminal 13 an instruction to explicitly display, in the determination section 31 that is displayed on the user terminal 13 and indicates whether reduction to the target value is possible, the fact that reduction is possible. Once this instruction has been transmitted, the process proceeds to step S205.

In step S205, the power management device 12 determines whether input to press the execute operation button 32 has been detected on the user terminal 13 (recognition step). When input has not been detected, the process returns to step S202. When input has been detected, the process proceeds to step S206.

In step S206, the power management device 12 determines that the longest time among the response times of all of the load devices 24 and the startup times of all of the power generation devices 26 selected using the selection checkbox 33 is the period of suspension of issuance of the warning. Once the period of suspension is determined, the process proceeds to step S207 (see FIG. 7).

In step S207, the power management device 12 transmits an instruction to the user terminal 13 to suspend issuance of the warning (suspension step). Once the instruction to suspend the warning has been transmitted, the process proceeds to step S208.

In step S208, the power management device 12 acquires the measured value of the power consumption of the load device 24 and the power generation of the power generation device 27 measured by the first sensor 20, the second sensor 22, and the third sensor 23. Upon acquiring the measured values, the process proceeds to step S209.

In step S209, the power management device 12 determines whether a change has occurred in the measured value of the load device 24 and the power generation device 26 selected in step S202. Whether a change has occurred in the measured value can be determined by, for example, comparing the difference between the previous measured value and the current measured value with a threshold. When a change has not occurred in the measured value, the process skips step S210 and proceeds to step S211. When a change has occurred in the measured value, the process proceeds to step S210.

In step S210, the power management device 12 calculates the response time and startup time of the load device 24 and power generation device 27 for which a change occurred in the measured value in step S209 to be the time from the start of suspension of the warning until the present. Once the response time and the like are calculated, the process proceeds to step S211.

In step S211, the power management device 12 determines whether calculation of the response time and the like in step S210 is complete for all of the load devices 24 and all of the power generation devices 27 selected in step S202. When calculation is not complete for a portion of the load devices 24 or a portion of the power generation devices 27, the process returns to step S208. When the calculation is complete for all of the load devices 24 and all of the power generation devices 27, the process proceeds to step S212.

In step S212, the power management device 12 transmits the response time and startup time of all of the load devices 24 and all of the power generation devices 27 selected in step S202 to the EMS server 14. Once the response time and the like are transmitted to the EMS server 14, the warning screen control process terminates.

According to the power management method of this embodiment with the above-described configuration, load device(s) 24 for which the response time is less than the remaining time are extracted, allowing presentation of load device(s) 24 for which an increase in the integral power consumption can be controlled by the end of the current demand time period. Therefore, the power manager in a store or the like can perceive which load devices 24 cannot reduce the integral power consumption by the end of the current demand time period.

According to the power management method of this embodiment, the load device(s) 24 for which the response time is less than the arrival time are also extracted. Hence, an increase in the integral power consumption can be controlled before the integral power consumption exceeds the target value during the current demand time period. Therefore, the power manager in a store or the like can perceive which load devices 24 allow the integral power consumption to be kept under the target value during the current demand time period.

According to the power management method of this embodiment, it can be determined whether the integral power consumption can be kept under the target value by the end of the current demand time period via an operation to reduce power consumption by the load device(s) 24 selected by the power manager in a store or the like. Accordingly, the power manager can perceive information useful for determining which load devices 24 to operate.

According to the power management method of this embodiment, during the determination of whether the integral power consumption can arrive below the target value by the end of the current demand time period, a warning can be issued until the determination is made. Accordingly, the power manager in a store or the like can be alerted until it is expected that the integral power consumption can be kept under the target value.

According to the power management method of this embodiment, after detecting that the execute operation button 32 has been pressed, issuance of the warning is suspended until the response time of the load device(s) 24 has elapsed. Accordingly, unnecessary warnings are not issued while waiting for an increase in the integral power consumption to be kept down, thereby reducing a sense of displeasure felt by the power manager of a store or the like.

According to the power management method of this embodiment, the effective remaining time and the effective arrival time that are compared with the response time and the startup time are reduced by the allowance time required from measurement of power consumption until presentation of choices. Accordingly, when creating the choices of load device(s) 24 over a network or the like, the effect of the time required for transmission can also be included in the creation of choices.

According to the power management method of this embodiment, the power generation device(s) 26 for which the startup time is less than the remaining time are extracted, thus allowing the integral power consumption to be reduced by the end of the current demand time period. Therefore, the power manager in a store or the like can perceive which power generation devices 26 cannot reduce the integral power consumption during the current demand time period.

Although this disclosure is based on embodiments and drawings, it is to be noted that various changes and modifications will be apparent to those skilled in the art based on this disclosure. Therefore, such changes and modifications are to be understood as included within the scope of this disclosure.

For example, whereas the EMS server 14 creates the choices in this embodiment, the power management device 12 may create the choices. A choice presentation program that creates the choices may be installed on the normal power management device 12.

### REFERENCE SIGNS LIST

- 10: Power control system
- 11: Internet
- 12: Power management device
- 13: User terminal
- 14: Energy Management System (EMS) server
- 15: Local Area Network (LAN)
- 16: Data collector
- 17: Controller
- 18: Controller queue
- 19: Memory
- 20: First sensor
- 21: Sensor manager
- 22: Second sensor
- 23: Third sensor
- 24: Load device
- 25: Demand supervision device
- 26: Power meter
- 27: Power generation device
- 28: Warning screen
- 29: Warning section
- 30: Table of choices
- 31: Determination section
- 32: Execute operation button
- 33: Selection checkbox

## Claims

1. A power management method for managing power for a consumer's facility using a power management device (12), the method comprising:
acquiring, by the power management device (12), an integral power consumption of load devices (24) of the consumer's facility;
predicting, by the power management device (12), whether the integral power consumption of the load devices (24) of the consumer's facility will exceed a predetermined value during a reference time used for electric power charge calculation between a consumer and a power company;
**characterized by**
extracting, by the power management device (12), each load device (24), from among the load devices (24) currently in use, for which a time, from execution of an operation to reduce power consumption until the power consumption is reduced, is less than a remaining time of the reference time; and
presenting, by the power management device (12), when predicting that the integral power consumption will exceed the predetermined value, a choice for each extracted load device (24) that should be operated manually to reduce power consumption.

2. The power management method of claim 1, further comprising:
selecting at least one of the load devices (24) that are presented; and
determining, by the power management device (12), whether the integral power consumption can be kept under the predetermined value by an end of the reference time via execution of an operation to reduce power consumption of the selected load device (24).

3. The power management method of claim 2, further comprising issuing, by the power management device (12), a warning until determining that the integral power consumption can be kept under the predetermined value by the end of the reference time.

4. The power management method of claim 2, further comprising:
recognizing, by the power management device (12), execution of an operation to reduce power consumption of the selected load device (24); and
suspending issuance of a warning by the power management device (12) until reduction of the power consumption of the load device (24) for which the execution of an operation to reduce power consumption was recognized.

5. The power management method of claim 1, wherein
the time, from execution of the operation to reduce power consumption until the power consumption is reduced, of each extracted load device (24) is less than an execution arrival time, and
the execution arrival time is a time required for the predicted integral power consumption to reach the predetermined value, minus an allowance time from measurement of the integral power consumption until presentation of the choices.

6. The power management method of claim 1, wherein
during the extracting, each power generation device (27) having a startup time, from execution of a startup operation until power generation begins, that is less than the remaining time of the reference time is extracted from among power generation devices (27) of the consumer's facility that are currently suspended, and
during the presenting, each extracted power generation device (27) is also presented.

7. The power management method of claim 1, wherein the predetermined value is a target value set in advance to be equal to or less than a threshold in a case that an electric rate for the electric power charge differs depending on whether the integral power consumption exceeds the threshold at an end of the reference time.

8. A power management device (12) for managing power for a consumer's facility, the power management device (12) comprising:
a controller (17) configured to acquire an integral power consumption of load devices (24) of the consumer's facility,
**characterized in that**
when predicting that the integral power consumption of the load devices (24) of the consumer's facility will exceed a predetermined value during a reference time used for electric power charge calculation between a consumer and a power company, the controller (17) is configured to
extract each load device (24), from among the load devices (24) currently in use, for which a time, from execution of an operation to reduce power consumption until the power consumption is reduced, is less than a remaining time of the reference time; and
present a choice for each extracted load device (24) that should be operated manually to reduce power consumption.

9. The power management device of claim 8, wherein the controller (17) is configured to determine, when at least one of the load devices (24) that are presented are selected, whether the integral power consumption can be kept under the predetermined value by an end of the reference time via execution of an operation to reduce power consumption of the selected load device (24).

10. The power management device (12) of claim 9, wherein the controller (17) is configured to issue a warning until determining that the integral power consumption can be kept under the predetermined value by the end of the reference time.

11. The power management device (12) of claim 9,
wherein the controller (17) is configured to recognize execution of an operation to reduce power consumption of the selected load device (24); and
wherein the controller (17) is configured to suspend issuance of a warning until reduction of the power consumption of the load device (24) for which the execution of an operation to reduce power consumption was recognized.

12. The power management device (12) of claim 8,
wherein the controller (17) is configured to present each load device (24) for which the time, from execution of the operation to reduce power consumption until the power consumption is reduced, is less than an execution arrival time, and
wherein the execution arrival time is a time required for the predicted integral power consumption to reach the predetermined value, minus an allowance time from measurement of the integral power consumption until presentation of the choices.

13. The power management device (12) of claim 8, wherein the controller (17) is also configured to present each power generation device (27) having a startup time, from execution of a startup operation until power generation beings, that is less than the remaining time of the reference time from among power generation devices (27) of the consumer's facility that are currently suspended.

14. The power management device (12) of claim 8, wherein the predetermined value is a target value set in advance to be equal to or less than a threshold in a case than an electric rate for the electric power charge differs depending on whether the integral power consumption exceeds the threshold at an end of the reference time.

## Patentansprüche

1. Energieverwaltungsverfahren zum Verwalten der Energie für eine Verbraucheranlage unter Verwendung einer Energieverwaltungsvorrichtung (12), das Verfahren umfassend:
Erfassen, durch die Energieverwaltungsvorrichtung (12), eines integralen Energieverbrauchs von Lastvorrichtungen (24) der Verbraucheranlage;
Vorhersagen, durch die Energieverwaltungsvorrichtung (12), ob der integrale Energieverbrauch der Lastvorrichtungen (24) der Verbraucheranlage einen vorbestimmten Wert während einer Referenzzeit überschreiten wird, die für die Berechnung der elektrischen Energiekosten zwischen einem Verbraucher und einem Energieversorgungsunternehmen verwendet wird;
**gekennzeichnet durch**
Extrahieren, durch die Energieverwaltungsvorrichtung (12), jeder Lastvorrichtung (24) aus den Lastvorrichtungen (24), die gegenwärtig verwendet werden, für die eine Zeit, von der Ausführung eines Betriebs zum Reduzieren des Energieverbrauchs bis der Energieverbrauch reduziert ist, geringer als eine verbleibende Zeit der Referenzzeit ist; und
Darstellen, durch die Energieverwaltungsvorrichtung (12), wenn vorhergesagt wird, dass der integrale Energieverbrauch den vorbestimmten Wert überschreiten wird, einer Auswahl für jede extrahierte Lastvorrichtung (24), die manuell betrieben werden sollte, um Energieverbrauch zu reduzieren.

2. Energieverwaltungsverfahren nach Anspruch 1, ferner umfassend:
Auswählen mindestens einer der dargestellten Lastvorrichtungen (24); und
Bestimmen, durch die Energieverwaltungsvorrichtung (12), ob der integrale Energieverbrauch bis zum Ende der Referenzzeit durch Ausführung eines Betriebs unter dem vorbestimmten Wert gehalten werden kann, um den Energieverbrauch der ausgewählten Lastvorrichtung (24) zu reduzieren.

3. Energieverwaltungsverfahren nach Anspruch 2, ferner umfassend Ausgeben, durch die Energieverwaltungsvorrichtung (12), einer Warnung bis festgestellt wird, dass der integrale Energieverbrauch bis zum Ende der Referenzzeit unter dem vorbestimmten Wert gehalten werden kann.

4. Energieverwaltungsverfahren nach Anspruch 2, ferner umfassend:
Erkennen, durch die Energieverwaltungsvorrichtung (12), der Ausführung eines Betriebs zum Reduzieren des Energieverbrauchs der ausgewählten Lastvorrichtung (24); und
Unterbrechen der Ausgabe einer Warnung durch die Energieverwaltungsvorrichtung (12) bis zur Reduzierung des Energieverbrauchs der Lastvorrichtung (24), für die die Ausführung eines Betriebs zum Reduzieren des Energieverbrauchs erkannt wurde.

5. Energieverwaltungsverfahren nach Anspruch 1, wobei
die Zeit von der Ausführung des Betriebs zum Reduzieren des Energieverbrauchs bis der Energieverbrauch reduziert ist, jeder extrahierten Lastvorrichtung (24) kürzer als eine Ausführungsankunftszeit ist, und
die Ausführungsankunftszeit eine Zeit ist, die erforderlich ist, damit der vorhergesagte integrale Energieverbrauch den vorbestimmten Wert erreicht, abzüglich einer Toleranzzeit von der Messung des integralen Energieverbrauchs bis zur Darstellung der Auswahlmöglichkeiten.

6. Energieverwaltungsverfahren nach Anspruch 1, wobei
während des Extrahierens, jede Energieerzeugungsvorrichtung (27) mit einer Startzeit, von der Ausführung eines Startbetriebs bis die Energieerzeugung beginnt, die geringer als die verbleibende Zeit der Referenzzeit ist, aus den Energieerzeugungsvorrichtungen (27) der Verbraucheranlage extrahiert wird, die aktuell unterbrochen sind, und
während des Darstellens, jede extrahierte Energieerzeugungsvorrichtung (27) auch dargestellt wird.

7. Energieverwaltungsverfahren nach Anspruch 1, wobei der vorbestimmte Wert ein Sollwert ist, der im Voraus eingestellt ist, um gleich oder geringer als ein Schwellenwert zu sein, falls sich eine elektrische Rate für die elektrische Energieladung in Abhängigkeit davon unterscheidet, ob der integrale Energieverbrauch die Schwelle an einem Ende der Referenzzeit überschreitet.

8. Energieverwaltungsvorrichtung (12) zum Verwalten von Energie für eine Verbraucheranlage, die Energieverwaltungsvorrichtung (12) umfassend:
eine Steuerung (17), die konfiguriert ist, um einen integralen Energieverbrauch von Lastvorrichtungen (24) der Verbraucheranlage zu erfassen,
**dadurch gekennzeichnet, dass**
wenn vorhergesagt wird, dass der integrale Energieverbrauch der Lastvorrichtungen (24) der Verbraucheranlage einen vorbestimmten Wert während einer Referenzzeit überschreiten wird, die für die Berechnung der elektrischen Energiekosten zwischen einem Verbraucher und einem Energieversorgungsunternehmen verwendet wird, die Steuerung (17) konfiguriert ist, um
jede Lastvorrichtung (24) aus den Lastvorrichtungen (24) zu extrahieren, die gegenwärtig verwendet werden, für die eine Zeit, von der Ausführung eines Betriebs zum Reduzieren des Energieverbrauchs bis der Energieverbrauch reduziert ist, geringer als eine verbleibende Zeit der Referenzzeit ist; und
eine Auswahl für jede extrahierte Lastvorrichtung (24) darzustellen, die manuell betrieben werden sollte, um den Energieverbrauch zu reduzieren.

9. Energieverwaltungsvorrichtung nach Anspruch 8, wobei die Steuerung (17) konfiguriert ist, um zu bestimmen, wann mindestens eine der präsentierten Lastvorrichtungen (24) ausgewählt wird, ob der integrale Energieverbrauch bis zu einem Ende der Referenzzeit durch Ausführung eines Betriebs zum Reduzieren des Energieverbrauchs der ausgewählten Lastvorrichtung (24) unter dem vorbestimmten Wert gehalten werden kann.

10. Energieverwaltungsvorrichtung (12) nach Anspruch 9, wobei die Steuerung (17) konfiguriert ist, um eine Warnung auszugeben, bis bestimmt wird, dass der integrale Energieverbrauch bis zum Ende der Referenzzeit unter dem vorbestimmten Wert gehalten werden kann.

11. Energieverwaltungsvorrichtung (12) nach Anspruch 9,
wobei die Steuerung (17) konfiguriert ist, um die Ausführung eines Betriebs zu erkennen, um den Energieverbrauch der ausgewählten Lastvorrichtung (24) zu reduzieren; und
wobei die Steuerung (17) konfiguriert ist, um die Ausgabe einer Warnung zu unterbrechen, bis Reduzierung des Energieverbrauchs der Lastvorrichtung (24), für die die Ausführung eines Betriebs zum Reduzieren von Energieverbrauch erkannt wurde.

12. Energieverwaltungsvorrichtung (12) nach Anspruch 8,
wobei die Steuerung (17) konfiguriert ist, um jede Lastvorrichtung (24) darzustellen, für die die Zeit, von der Ausführung des Betriebs zum Reduzieren des Energieverbrauchs bis der Energieverbrauch reduziert ist, geringer als eine Ausführungsankunftszeit ist, und
wobei die Ausführungsankunftszeit eine Zeit ist, die erforderlich ist, damit der vorhergesagte integrale Energieverbrauch den vorbestimmten Wert erreicht, abzüglich einer Toleranzzeit von der Messung des integralen Energieverbrauchs bis zur Darstellung der Auswahlmöglichkeiten.

13. Energieverwaltungsvorrichtung (12) nach Anspruch 8, wobei die Steuerung (17) auch konfiguriert ist, um jede Energieerzeugungsvorrichtung (27) mit einer Startzeit, von der Ausführung eines Startbetriebs bis die Energieerzeugung beginnt, die geringer ist als die verbleibende Zeit der Referenzzeit zwischen Stromerzeugungsgeräten (27) der Verbraucheranlage, die aktuell unterbrochen sind, darzustellen.

14. Energieverwaltungsvorrichtung (12) nach Anspruch 8, wobei der vorbestimmte Wert ein Sollwert ist, der im Voraus eingestellt ist, um gleich oder geringer als ein Schwellenwert zu sein, falls eine elektrische Rate für die elektrische Energieladung unterschiedlich ist, abhängig davon, ob der integrale Energieverbrauch die Schwelle an einem Ende der Referenzzeit überschreitet.

## Revendications

1. Procédé de gestion d'énergie permettant de gérer l'énergie de l'installation d'un consommateur à l'aide d'un dispositif de gestion d'énergie (12), le procédé comprenant :
l'acquisition, par le dispositif de gestion d'énergie (12), d'une consommation d'énergie intégrale de dispositifs de charge (24) de l'installation du consommateur ;
la prédiction, par le dispositif de gestion d'énergie (12) du fait que la consommation d'énergie intégrale des dispositifs de charge (24) de l'installation du consommateur dépassera ou non une valeur prédéterminée pendant une durée de référence utilisée pour un calcul de charge d'énergie électrique entre un consommateur et un fournisseur d'électricité ;
**caractérisé par**
l'extraction, par le dispositif de gestion d'énergie (12), de chaque dispositif de charge (24) parmi les dispositifs de charge (24) en cours d'utilisation, pour lequel une durée, de l'exécution d'une opération visant à réduire la consommation d'énergie jusqu'à la réduction de la consommation d'énergie, est inférieure à une durée restante de la durée de référence ; et
la présentation, par le dispositif de gestion d'énergie (12), lors de la prédiction du fait que la consommation d'énergie intégrale dépassera la valeur prédéterminée, d'un choix pour chaque dispositif de charge extrait (24) qui devrait être actionné manuellement afin de réduire la consommation d'énergie.

2. Procédé de gestion d'énergie de la revendication 1, comprenant en outre :
la sélection d'au moins l'un des dispositifs de charge (24) qui sont présentés ; et
la détermination, par le dispositif de gestion d'énergie (12), du fait que la consommation d'énergie intégrale peut ou non être maintenue sous la valeur prédéterminée jusqu'à une fin de la durée de référence via l'exécution d'une opération visant à réduire la consommation d'énergie du dispositif de charge (24) sélectionné.

3. Procédé de gestion d'énergie de la revendication 2, comprenant en outre l'émission, par le dispositif de gestion d'énergie (12), d'une alerte jusqu'à la détermination du fait que la consommation d'énergie intégrale peut être maintenue sous la valeur prédéterminée jusqu'à la fin de la durée de référence.

4. Procédé de gestion d'énergie de la revendication 2, comprenant en outre :
la reconnaissance, par le dispositif de gestion d'énergie (12), de l'exécution d'une opération visant à réduire la consommation d'énergie du dispositif de charge (24) sélectionné ; et
la suspension de l'émission d'une alerte par le dispositif de gestion d'énergie (12) jusqu'à la réduction de la consommation d'énergie du dispositif de charge (24) pour lequel l'exécution d'une opération visant à réduire la consommation d'énergie a été reconnue.

5. Procédé de gestion d'énergie de la revendication 1, dans lequel
la durée, de l'exécution de l'opération visant à réduire la consommation d'énergie jusqu'à la réduction de la consommation d'énergie, de chaque dispositif de charge (24) extrait, est inférieure à une durée d'arrivée d'exécution, et
la durée d'arrivée d'exécution est une durée requise pour que la consommation d'énergie intégrale prédite atteigne la valeur prédéterminée, moins une durée d'admission de la mesure de la consommation d'énergie intégrale jusqu'à la présentation des choix.

6. Procédé de gestion d'énergie de la revendication 1, dans lequel
pendant l'extraction, chaque dispositif de génération d'énergie (27) ayant une durée de démarrage, de l'exécution d'une opération de démarrage jusqu'au début de la génération d'énergie, qui est inférieure à la durée restante de la durée de référence est extrait parmi des dispositifs de génération d'énergie (27) de l'installation de consommateur qui sont en cours de suspension, et
pendant la présentation, chaque dispositif de génération d'énergie (27) est également présenté.

7. Procédé de gestion d'énergie de la revendication 1, dans lequel la valeur prédéterminée est une valeur cible établie à l'avance pour être inférieure ou égale à un seuil dans un cas où un tarif électrique pour la charge d'énergie électrique diffère en fonction du fait que la consommation d'énergie intégrale dépasse ou non le seuil à une fin de la durée de référence.

8. Dispositif de gestion d'énergie (12) permettant de gérer l'énergie de l'installation d'un consommateur, le dispositif de gestion d'énergie (12) comprenant :
un dispositif de commande (17) configuré pour acquérir une consommation d'énergie intégrale de dispositifs de charge (24) de l'installation du consommateur ;
**caractérisé en ce que**
lors de la prédiction du fait que la consommation d'énergie intégrale des dispositifs de charge (24) de l'installation du consommateur dépassera ou non une valeur prédéterminée pendant une durée de référence utilisée pour un calcul de charge d'énergie électrique entre un consommateur et un fournisseur d'électricité, le dispositif de commande (17) est configuré pour
extraire chaque dispositif de charge (24) parmi les dispositifs de charge (24) en cours d'utilisation, pour lequel une durée, de l'exécution d'une opération visant à réduire la consommation d'énergie jusqu'à la réduction de la consommation d'énergie, est inférieure à une durée restante de la durée de référence ; et
présenter un choix pour chaque dispositif de charge (24) extrait qui devrait être actionné manuellement afin de réduire la consommation d'énergie.

9. Dispositif de gestion d'énergie de la revendication 8, dans lequel le dispositif de commande (17) est configuré pour déterminer, lorsqu'au moins l'un des dispositifs de charge (24) qui sont présentés est sélectionné, si la consommation d'énergie intégrale peut être maintenue sous la valeur prédéterminée jusqu'à la fin de la durée de référence via l'exécution d'une opération visant à réduire la consommation d'énergie du dispositif de charge (24) sélectionné.

10. Dispositif de gestion d'énergie (12) de la revendication 9, dans lequel le dispositif de commande (17) est configuré pour émettre une alerte jusqu'à la détermination du fait que la consommation d'énergie intégrale peut être maintenue sous la valeur prédéterminée jusqu'à la fin de la durée de référence.

11. Dispositif de gestion d'énergie (12) selon la revendication 9,
dans lequel le dispositif de commande (17) est configuré pour reconnaître l'exécution d'une opération visant à réduire la consommation d'énergie du dispositif de charge (24) sélectionné ; et
dans lequel le dispositif de commande (17) est configuré pour suspendre l'émission d'une alerte jusqu'à la réduction de la consommation d'énergie du dispositif de charge (24) pour lequel l'exécution d'une opération visant à réduire la consommation d'énergie a été reconnue.

12. Dispositif de gestion d'énergie (12) selon la revendication 8,
dans lequel le dispositif de commande (17) est configuré pour présenter chaque dispositif de charge (24) pour lequel la durée, de l'exécution d'une opération visant à réduire la consommation d'énergie jusqu'à la réduction de la consommation d'énergie, est inférieure à une durée d'arrivée d'exécution, et
dans lequel la durée d'arrivée d'exécution est une durée requise pour que la consommation d'énergie intégrale prédite atteigne la valeur prédéterminée, moins une durée d'admission de la mesure de la consommation d'énergie intégrale jusqu'à la présentation des choix.

13. Dispositif de gestion d'énergie (12) de la revendication 8, dans lequel le dispositif de commande (17) est également configuré pour présenter chaque dispositif de génération d'énergie (27) ayant une durée de démarrage, de l'exécution d'une opération de démarrage jusqu'au début de la génération d'énergie, qui est inférieure à la durée restante de la durée de référence parmi des dispositifs de génération d'énergie (27) de l'installation de consommateur qui sont en cours de suspension.

14. Dispositif de gestion d'énergie (12) de la revendication 8, dans lequel la valeur prédéterminée est une valeur cible établie à l'avance pour être inférieure ou égale à un seuil dans un cas où un tarif électrique pour la charge d'énergie électrique diffère en fonction du fait que la consommation d'énergie intégrale dépasse ou non le seuil à une fin de la durée de référence.
